# EUROPÄISCHE PATENTSCHRIFT

(11) **EP 0 463 323 B1**
(45) Veröffentlichungstag und Bekanntmachung des Hinweises auf die Patenterteilung: **06.04.1994**
(21) Anmeldenummer: 91107084.5
(22) Anmeldetag: 02.05.1991
(51) Int. Cl.: A01D 78/10

(54) **Zweikreiselschwader**
Two-rotor windrower
Andaineuse à deux rotors

(30) Priorität: 22.06.1990 DE 4019942
(43) Veröffentlichungstag der Anmeldung: 02.01.1992
(73) Patentinhaber: CLAAS SAULGAU GMBH, D-88340 Saulgau (DE)
(72) Erfinder: Geng, Manfred, W-7968 Saulgau-Bogenweiler (DE)

(56) Entgegenhaltungen:
- AT-B- 276 838
- CH-A- 418 041
- DE-U- 7 818 724
- DE-U- 8 807 054
- GB-A- 2 095 525

## Beschreibung

Die Erfindung bezieht sich auf einen an einen Schlepper anhängbaren Zweikreisel-Schwader nach dem Oberbegriff des Anspruches 1.

Ein Zweikreisel-Schwader dieser Gattung ist zum Beispiel in der Deutschen Gebrauchsmusterschrift 7818724 beschrieben. Diese Maschinen leisten in der Geradeausfahrt eine saubere Recharbeit. Insbesondere gibt der vorauslaufende Schwadkreisel seinen Schwad geordnet an den nachlaufenden Schwadkreisel ab. Anders in der Kurvenfahrt. Da die beiden Stützradpaare parallel zueinander versetzt sind, gibt es keine definierte Schwenkachse, die Stützräder müssen also zwangsweise schurren und die Schwadkreisel können eine Stellung einnehmen, bei der der vorlaufende Schwadkreisel nicht mehr geordnet an den nachlaufenden Schwadkreisel abgibt.

Dieser Nachteil soll mit einer Ausführung nach der Erfindung vermieden werden. Ein geordneter Kurvenlauf der Maschine wird dadurch erreicht, daß die Schwadkreisel mit ihren Stützrädern von einem mindestens zwei-rädrigen Fahrgestell getragen werden, dessen eines Laufrad in dem Zwischenraum zwischen den beiden Schwadkreiseln angeordnet ist. Dieses Fahrgestellt definiert bei Kurvenfahrt den Kurvenradius und zwingt die Stützräder der Schwadkreisel, diesem zu folgen.

In den Unteransprüchen sind vorteilhafte Ausführungsformen beschrieben und beansprucht, die einzeln oder in Kombination angewandt werden können und die besonders auch die Qualität der Bodenanpassung verbessern und eine vorteilhafte Transportstellung ermöglichen.

Die Erfindung wird anhand von zwei Abbildungen beispielsweise beschrieben:

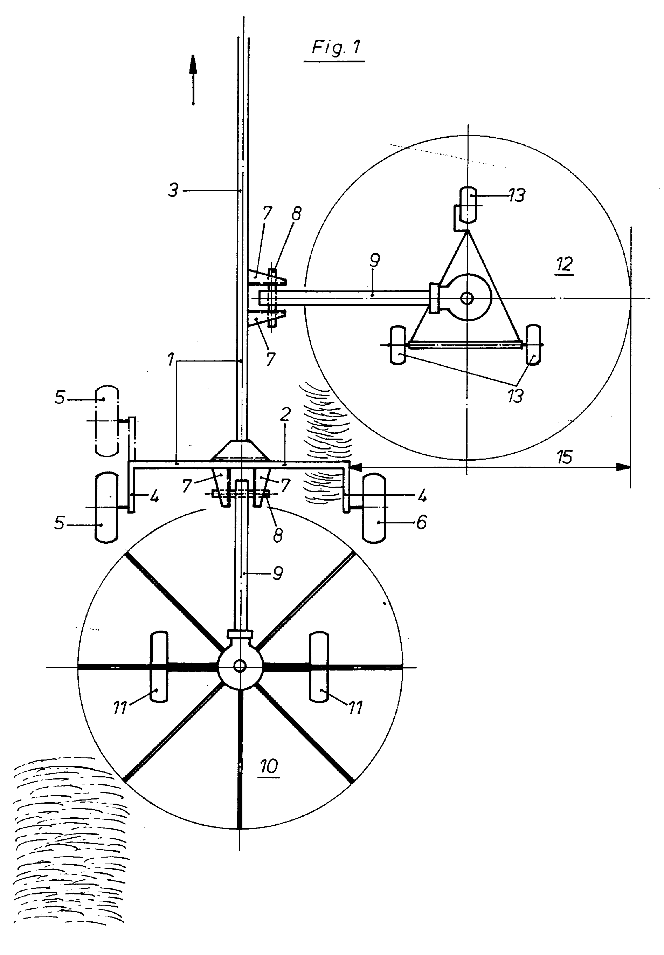

- Fig. 1: zeigt einen Zweikreisel-Schwader in Draufsicht,
- Fig. 2: zeigt den gleichen Gegenstand in Seitenansicht, wobei die Schwadkreisel in Transportstellung gestrichelt gezeichnet sind.

Ein Fahrgestell (1) besteht aus einem Achsträger (2), einer fest damit verbundenen Deichsel (3), Radträgern (4) und einem linken Laufrad (5) und einem rechten Laufrad (6). Das linke Laufrad (5) kann auch in einer Stellung wie strichpunktiert gezeichnet, angeordnet sein. An der Rückseite des Achsträgers (2) sind Lagerstege (7) fest angebracht. Sie nehmen einen Gelenkbolzen (8) auf, der seinerseits einen Tragarm (9) durchsetzt. Am anderen Ende des Tragarmes (9) ist ein nachlaufender Schwadkreisel (10) bekannter Bauart gelagert. Der Schwadkreisel (10) stützt sich auf ein Fahrwerk mit zwei Stützrädern (11) ab.

An der Deichsel (3) sind ebenfalls Lagerstege (7) vorgesehen, die einen Gelenkbolzen (8) tragen, der einen Tragarm (9) des vorauslaufenden Schwadkreisels (12) durchsetzt. Der Schwadkreisel (12) stützt sich auf ein Dreirad-Fahrwerk (13) ab. Damit das Fahrwerk mit den Stützrädern (11) und das Dreirad-Fahrwerk (13) kleinen Bodenunebenheiten folgen kann, sind in den Gelenkverbindungen (7, 8, 9) Lagerspiele vorgesehen. Statt deren könnten auch Gelenke vorgesehen sein, die eine begrenzte Drehbewegung um die Achse der Tragarme (9) zulassen.

Die Schwadkreisel (10, 12) können durch bekannte und deshalb nicht dargestellte Antriebsmittel angetrieben werden.

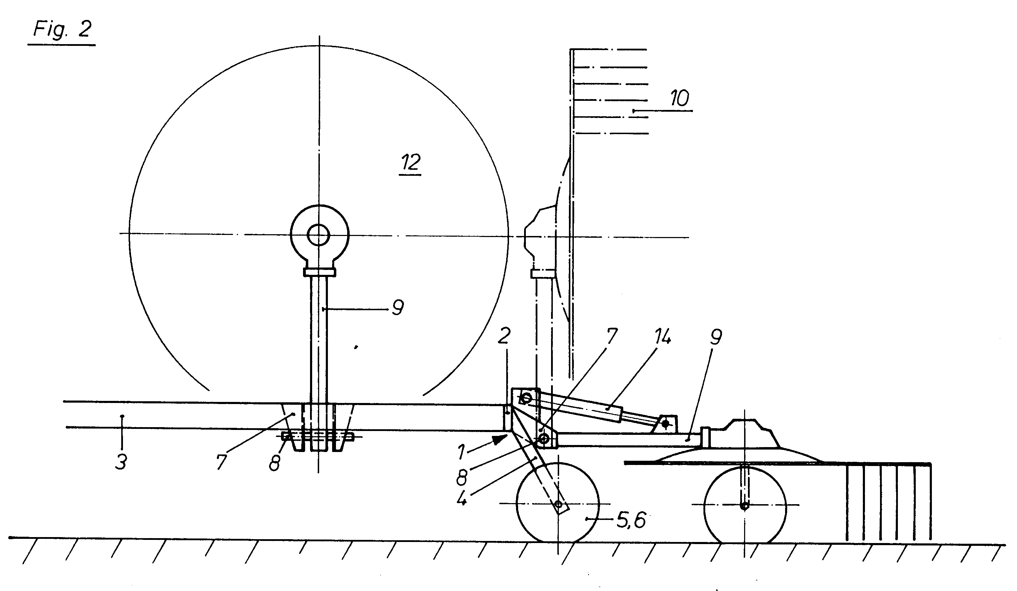

Zum Straßentransport können die Schwadkreisel (10, 12) mittels hydraulischen Hubzylindern (14) (Figur 2), die sich an dem Fahrgestell (1) abstützen, um die Gelenkbolzen (8) drehend in eine etwa senkrechte Lage verbracht werden.

## Patentansprüche

1. Zweikreisel-Schwader der an einem Schlepper anhängbar ist, mit zwei im gleichen Drehsinn umlaufenden, von Stützrädern (11,13) getragenen Schwadkreiseln (10,12), die in Fahrtrichtung gestaffelt zueinander angeordnet sind, dadurch gekennzeichnet, daß die beiden Schwadkreisel (10, 12) mit ihren Stützrädern (11,13) von einem mindestens zweirädrigen Fahrgestell (1) getragen werden, dessen eines Laufrad (6) in dem Zwischenraum zwischen den beiden Schwadkreiseln (10, 12) angeordnet ist.

2. Zweikreisel-Schwader nach Anspruch 1, dadurch gekennzeichnet, daß das Laufrad (6) in einer von dem vorauslaufenden Schwadkreisel (12) freigeräumten Zone (15) läuft.

3. Zweikreisel-Schwader nach den Anspüchen 1 und 2, dadurch gekennzeichnet, daß einer der Schwadkreisel (12) seitlich an dem Fahrgestell (1) und der andere Schwadkreisel (10) an der Rückseite des Fahrgestelles (1) angelenkt sind.

4. Zweikreisel-Schwader nach den Ansprüchen 1 - 3, dadurch gekennzeichnet, daß die Schwadkreisel (10, 12) gelenkig mit dem Fahrgestell (1) verbunden sind und zwar der vorauslaufende Schwadkreisel (12) an einer in Fahrtrichtung liegenden horizontalen Schwenkachse (8) und der nachlaufende Schwadkreisel (10) an einer quer zur Fahrtrichtung liegenden horizontalen Schwenkachse (8).

5. Zweikreisel-Schwader nach den Ansprüchen 1 - 4, dadurch gekennzeichnet, daß zwei Laufräder (5, 6) des Fahrgestells (1) achsfluchtend angeordnet sind.

6. Zweikreisel-Schwader nach den Ansprüchen 1 - 4, dadurch gekennzeichnet, daß das in dem Zwischenraum zwischen den Schwadkreiseln (10, 12) angeordnete Laufrad (6) in Fahrtrichtung hinter einem anderen Laufrad (5) angeordnet ist.

7. Zweikreisel-Schwader nach den Ansprüchen 1 - 4, dadurch gekennzeichnet, daß das Fahrgestell (1) auf einer Seite ein Laufrad (6) besitzt und auf der anderen Seite zwei Laufräder (5), die an einer um eine quer zur Fahrtrichtung pendelbaren Radschwinge gelagert sind.

8. Zweikreisel-Schwader nach den Ansprüchen 3 und 4, dadurch gekennzeichnet, daß die gelenkige Verbindung (7, 8, 9) der Schwadkreisel (10, 12) mit dem Fahrgestell (1) auch eine begrenzte Drehbewegung der Schwadkreisel (10, 12) um die Achse ihrer Tragarme (9) zuläßt.

9. Zweikreisel-Schwader nach den Ansprüchen 1 - 8, dadurch gekennzeichnet, daß der vorauslaufende Schwadkreisel (12) von drei im Dreieck angeordneten Stützrädern (13) getragen wird und daß der nachlaufende Schwadkreisel (10) von mindestens zwei Stützrädern (11) getragen wird.

10. Zweikreisel-Schwader nach den Ansprüchen 3 und 4, dadurch gekennzeichnet, daß der vorauslaufende Schwadkreisel (12) so an das Fahrgestell (1) angelenkt ist, daß er eine begrenzte Drehbewegung um eine zusätzliche zur Fahrtrichtung parallele Längsachse ausführen kann.

## Claims

1. A two-rotor windrower which can be coupled to a tractor, having two windrower rotors (10, 12) which rotate in the sane direction and which are supported by support wheels (11, 13) and which are arranged in staggered relationship with each other in the direction of travel, characterised in that the two windrower rotors (10, 12) with their support wheels (11, 13) are carried by an at least two-wheeled chassis (1), one wheel (6) of the chassis being arranged in the space between the two windrower rotors (10, 12).

2. A two-rotor windrower according to claim 1 characterised in that the wheel (6) runs in a zone (15) which is cleared by the leading windrower rotor (12).

3. A two-rotor windrower according to claims 1 and 2 characterised in that one of the windrower rotors (12) is coupled laterally to the chassis (1) and the other windrower rotor (10) is coupled to the rear of the chassis (1).

4. A two-rotor windrower according to claims 1 to 3 characterised in that the windrower rotors (10, 12) are hingedly connected to the chassis (1), more specifically the leading windrower rotor (12) at a horizontal pivot axis (8) which is disposed in the direction of travel and the trailing windrower rotor (10) at a horizontal pivot axis (8) which is disposed transversely to the direction of travel.

5. A two-rotor windrower according to claims 1 to 4 characterised in that two wheels (5, 6) of the chassis (1) are arranged with their axes in alignment.

6. A two-rotor windrower according to claims 1 to 4 characterised in that the wheel (6) which is arranged in the space between the windrower rotors (10, 12) is arranged behind another wheel (5) in the direction of travel.

7. A two-rotor windrower according to claims 1 to 4 characterised in that the chassis (1) has a wheel (6) on one side and two wheels (5) on the other side, the two wheels being mounted on a wheel rocking member which is rockable about an axis transversely to the direction of travel.

8. A two-rotor windrower according to claims 3 and 4 characterised in that the hinged connection (7, 8, 9) of the windrower rotors (10, 12) to the chassis (1) also permits a limited rotary movement of the windrower rotors (10, 12) about the axis of their carrier arms (9).

9. A two-rotor windrower according to claims 1 to 8 characterised in that the leading windrower rotor (12) is supported by three support wheels (13) which are arranged in a triangle and that the trailing windrower rotor (10) is supported by at least two support wheels (11).

10. A two-rotor windrower according to claims 3 and 4 characterised in that the leading windrower rotor (12) is so mounted to the chassis (1) that it can perform a limited rotary movement about an additional longitudinal axis which is parallel to the direction of travel.

## Revendications

1. Andaineuse à deux rotors qui peut être attelée à un tracteur, comprenant deux rotors d'andainage (10, 12) tournant dans le même sens et supportés par des roues d'appui (11, 13), qui sont montés de façon décalée l'un par rapport à l'autre dans la direction de la marche, caractérisée en ce que les deux rotors d'andainage (10, 12) sont supportés avec leurs roues d'appui (11, 13) par au moins un châssis porteur (1) à au moins deux roues, dont une roue (6) est disposée dans l'espace situé entre les deux rotors d'andainage (10, 12).

2. Andaineuse à deux rotors selon la revendication 1, caractérisée en ce que la roue (6) passe dans une zone (15) laissée libre par le rotor d'andainage avant (12).

3. Andaineuse à deux rotors selon les revendications 1 et 2, caractérisée en ce que l'un des rotors d'andainage (12) est raccordé latéralement au châssis porteur (1) et l'autre rotor d'andainage (10) est raccordé au côté arrière du châssis porteur (1).

4. Andaineuse à deux rotors selon les revendications 1 à 3, caractérisée en ce que les rotors d'andainage (10, 12) sont reliés de façon articulée au châssis porteur (1), le rotor d'andainage (12) situé à l'avant présentant un axe de pivotement (8) horizontal orienté dans la direction de la marche et le rotor d'andainage situé à l'arrière (10) présentant un axe de pivotement (8) horizontal disposé transversalement à la direction de la marche.

5. Andaineuse à deux rotors selon les revendications 1 à 4, caractérisée en ce que deux roues (5, 6) du châssis porteur (1) sont situées sur le même axe.

6. Andaineuse à deux rotors selon les revendications 1 à 4, caractérisée en ce que la roue (6) disposée dans l'espace situé entre les rotors d'andainage (10, 12) est disposée à l'arrière d'une autre roue (5) dans la direction de la marche.

7. Andaineuse à deux rotors selon les revendications 1 à 4, caractérisée en ce que le châssis porteur (1) comprend sur un côté une roue (6) et sur l'autre côté deux roues (5), qui sont montées sur une bielle pouvant effectuer un mouvement pendulaire transversalement à la direction de la marche.

8. Andaineuse à deux rotors selon les revendications 3 et 4, caractérisée en ce que la liaison articulée (7, 8, 9) des rotors d'andainage (10, 12) permet aussi, avec le châssis porteur (1), un mouvement de rotation limité des rotors d'andainage (10, 12) autour des axes de leurs bras de support (9).

9. Andaineuse à deux rotors selon les revendications 1 à 8, caractérisée en ce que le rotor d'andainage avant (12) est supporté par trois roues de support (13) disposées en triangle et en ce que le rotor d'andainage arrière (10) est supporté par au moins deux roues de support (11).

10. Andaineuse à deux rotors selon les revendications 3 et 4, caractérisée en ce que le rotor d'andainage avant (12) est articulé sur le châssis porteur (1) de manière à pouvoir effectuer un mouvement de rotation limité autour d'un axe longitudinal additionnel parallèle à la direction de la marche.
